(19)

Europäisches
Patentamt
European
Patent Office
Office européen
des brevets

(11)  EP 2 876 561 A1

(12)  **EUROPEAN PATENT APPLICATION**
published in accordance with Art. 153(4) EPC

(43) Date of publication:
**27.05.2015  Bulletin 2015/22**

(21) Application number: **13886161.2**

(22) Date of filing: **16.09.2013**

(51) Int Cl.:
***G06F 17/30*** (2006.01)

(86) International application number:
**PCT/CN2013/083524**

(87) International publication number:
**WO 2015/035628 (19.03.2015 Gazette 2015/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority:  **12.09.2013  CN 201310416693**

(71) Applicant: **Guangdong Electronics Industry
Institute Ltd.
Dongguan, Guangdong 523808 (CN)**

(72) Inventors:
• **YUAN, Zimu
  DongGuan
  Guangdong 523808 (CN)**

• **PENG, Peng
  DongGuan
  Guangdong 523808 (CN)**
• **JI, Tongkai
  DongGuan
  Guangdong 523808 (CN)**
• **YUE, Qiang
  DongGuan
  Guangdong 523808 (CN)**

(74) Representative: **Hocking, Adrian Niall et al
Albright IP Limited
Eagle Tower
Montpellier Drive
Cheltenham GL50 1TA (GB)**

(54)  **METHOD OF CLUSTERING LITERATURE IN MULTIPLE LANGUAGES**

(57)     The present invention relates to a technical field of information retrieval, and more particularly to a clustering method for multilingual documents, comprising steps of: step 1: establishing a similar words bank comprising multilingual words; step 2: extracting eight eigenvalues; step3: calculating a similarity of any two documents $i$ and $j$; step 4: selecting accumulation points from a set of the documents to establish a cluster; step 5: adding residual documents which are not selected in the set to the cluster; and step 6: disposing the cluster in a circular ring structure. The method of the present invention does not limit categories of languages in the documents, the accumulation points are selected according to judgments of similarity to establish clusters and classify multilingual documents in the clusters. The method of the present invention is suitable for clustering multilingual documents.

Fig. 1

EP 2 876 561 A1

## Description

### Field of Invention

The present invention relates to a technical field of information retrieval, and more particularly to a clustering method for multilingual documents.

### Description of Related Arts

When accessing to the internet, users often search information he or she is concerned about on a search engine. Information retrieval systems which are similar to the search engine usually filter and search bulk data, and processing time is required to be fast enough for providing the users a timely response, in such a manner that waiting of the users is avoided.

The clustering technique in the information retrieval system guarantees a searching time fast enough for providing the users sufficient information. Clustering, which refers to categorizing information in the information retrieval system, is an effective improvement strategy in the information retrieval system and capable of providing more complete information for users. Applying clustering technique in information retrieval enables the users to quickly locate contents they are interested in during processes of information retrieval. Compared with information retrieval systems without applying the clustering technique, information retrieval systems using the clustering technique has an effect of reducing waiting time of the users and has characteristics of clearer classification.

### Summary of the Present Invention

Accordingly, in order to solve technical problems mentioned above, the present invention provides a clustering method for multilingual documents which is capable of fusing the multilingual documents.

Technical solutions for solving the technical problems mentioned above are as follows. A clustering method for multilingual documents, comprising following steps of:

step 1: establishing a similar words bank comprising multilingual words;

step 2: extracting eight eigenvalues;

step3: calculating a similarity of any two documents $i$ and $j$ according to the eight eigenvalues;

step 4: selecting accumulation points from a set of the documents to establish a cluster;

step 5: adding residual documents which are not selected into the set to the cluster; and

step 6: disposing the cluster in a circular ring structure.

Wherein in the step 1, multilingual words having identical or similar meanings are recorded in each line of the similar words bank, and whether the multilingual words are verbs or nouns is marked.

In the step 2, the eight eigenvalues comprise: an eigenvalue of citation relationships ($f_1$), an eigenvalue of identical references ($f_2$), an eigenvalue of identical strings ($f_3$), an eigenvalue of similar strings ($f_4$), an eigenvalue of identical nouns ($f_5$), an eigenvalue of similar nouns ($f_6$), an eigenvalue of identical verbs ($f_7$), and an eigenvalue of similar verbs ($f_8$);

wherein the eight eigenvalues are not limited to a particular language, and the multilingual documents are fused in a cluster classification;

wherein citation documents refer to references listed in a document;

the identical strings refer to strings formed by a section of identical words;

the similar strings refer to strings having a section of identical words or formed by a section of similar words recorded in the similar words bank;

the identical nouns refer to completely identical nouns;

the similar nouns refer to nouns recorded on a same line of the similar words bank;

the identical verbs refer to completely identical verbs; and

the similar verbs refer to verbs recorded on a same line of the similar words bank;

wherein for a document $i$, an eigenvector thereof is $F(i)$, $F(i) = (f_1(i), f_2(i), f_3(i), f_4(i), f_5(i), f_6(i), f_7(i), f_8(i)$

Preferably, in the step 3, importance of the eight eigenvalue is $f_1 > f_2 > f_3 > f_4 > f_5 > f_6 > f_7 > f_8$ ;

wherein the step 3 specifically comprises a step of calculating products of eigenvalues of any two documents *i* and *j* , wherein the step of calculating the products comprises:

calculating a product of citation documents $f_1(i)f_1(j)$, wherein *W* is defined as a weight of one of the documents in *i* and *j* cited by the other of the documents *i* and *j*;

*bool* represents that whether a citation relationship exists, wherein a value of *bool* is 0 or 1, the value 0 represents that the citation relationship does not exist, and the value 1 represents that the citation relationship exists; wherein a calculating expression is:

$$f_1(i)f_1(j) = bool \times W$$
;

calculating a product of the identical references $f_2(i)f_2(j)$, wherein *d* is defined as a weighting factor of division and $d \geq 1$

*Refs* represents a number of the references;

*Max{Refs(i),Refs(j)}* represents a maximum of the number of the references selected from *i* and *j* ;

*CommonRefs(i,j)* represents a number of identical references in the two documents of *i* and *j*, and a calculating expression is:

$$f_2(i)f_2(j) = \frac{W}{d} \times \frac{CommonRefs(i,j)}{Max\{Refs(i),Refs(j)\}}$$
;

calculating a product of the identical strings $f_3(i)f_3(j)$ , wherein *CommonStrs(i,j)* is defined as identical strings in the two documents *i* and *j* ; *Length* represents a length of the strings, and thus *Length(CommonStrs(i,j))* represents a total length of the identical strings, Max{*Length(i), Length(j)*} represents a maximum of a total length of the two documents *i* and *j* ; and a calculating expression is:

$$f_3(i)f_3(j) = \frac{W}{d^2} \times \frac{Length(CommonStrs(i,j))}{Max\{Length(i),Length(j)\}}$$
;

calculating a product of the similar strings $f_4(i)\,f_4(j)$ , wherein *SimilarStrs(i,j)* is defined as similar strings in the two documents *i* and *j*, and a calculating expression is:

$$f_4(i)f_4(j) = \frac{W}{d^3} \times \frac{Length(SimilarStrs(i,j))}{Max\{Length(i),Length(j)\}}$$
;

calculating a product of the identical nouns $f_5(i)f_5(j)$, *CommonNouns(i,j)* is defined as identical nouns in the two documents *i* and *j* ; *Nouns* represents a total number of nouns in the documents, and thus Max{*Nouns(i), Nouns(j)*} represents a maximum of the total number of the nouns in the two documents *i* and *j*, and a calculating expression is:

$$f_5(i)f_5(j) = \frac{W}{d^4} \times \frac{CommonNouns(i,j)}{Max\{Nouns(i),Nouns(j)\}}$$
;

calculating a product of the similar nouns $f_6(i)f_6(j)$, wherein *SimilarNouns(i,j)* is defined as nouns having similar meanings in the two documents *i* and *j*, and a calculating expression is:

$$f_6(i)f_6(j) = \frac{W}{d^5} \times \frac{SimilarNouns(i,j)}{Max\{Nouns(i), Nouns(j)\}},$$

calculating a product of the identical verbs, wherein *CommonVerbs(i,j)* is defined as identical verbs in the two documents *i* and *j*, *Verbs* represents a total number of verbs in the documents, and thus Max{*Verbs(i), Verbs(j)*} represents a maximum of the total number of the nouns in the two documents *i* and *j*, and a calculating expression is:

$$f_7(i)f_7(j) = \frac{W}{d^6} \times \frac{CommonVerbs(i,j)}{Max\{Verbs(i), Verbs(j)\}},$$

and

calculating a product of the similar verbs $f_8(i)f_8(j)$, *SimilarVerbs(i,j)* is defined as verbs having similar meanings in the two documents *i* and *j*, and a calculating expression is:

$$f_8(i)f_8(j) = \frac{W}{d^7} \times \frac{SimilarVerbs(i,j)}{Max\{Verbs(i), Verbs(j)\}},$$

based on calculations of products of the eigenvalues, a similarity of the two documents *i* and *j* is defined as:

$$Proximity(i,j) = \sum_{q=1}^{8} f_q(i)f_q(j).$$

In the step 4, on an initial condition, two most dissimilar documents, i.e., with a minimum *Proximity(i,j),* are selected for serving as two initial accumulation points $p_1$ and $p_2$, $p_1$ and $p_2$ are added to an accumulation point set denoted as *Points*; residual accumulation points are selected according to a following maximum and minimum formula:

$$p_{m+1} = Arg \min_{p \in Points} \{Max_{r=1,2,...,m} Proximity(p,p_r)\};$$

wherein in the formula, $p_r$, $r = 1,2,..., m$ represents documents selected as the accumulation points, then an (m+1)th accumulation point is selected from documents which haven't been selected as the accumulation points and added to the set *Points,* a threshold value *Th* is set for the formula mentioned above; when a stopping accumulation point selected

satisfies $\min_{p \in Points} \{Max\ Proximity(p,p_r)\} > Th$ , selection of accumulation points are stopped; in addition, the stopping accumulation point is not added to the set *Points.*

Preferably, in the step 5, *N* represents a total number of documents participating in clustering, *M* represents a total number of accumulation points selected;

at the beginning, *M* documents serve as accumulation points of the clustering, residual *N - M* documents are added in the M clusters;

*Cluster(p_r),* $r = 1,2,..., M$ represents a set of each cluster;

at the beginning, each set only has one documents serving as the accumulation points;

for a document *i* not participating in the clusters, a most similar cluster is calculated according to a following expression:

$$p_q = Arg \ \max_{r=1,2,\ldots,M}\left\{\frac{\sum_{p\in Cluster(p_r)} Proximity(p,i)}{|Cluster(p_r)|}\right\} ;$$

in the expression mentioned above, a similarity of between a document $i$ not added in the clusters and all documents in the set $Cluster(p_r)$ of each cluster, an average is taken for serving as a similarity of the document $i$ and the clusters; a maximum of all the clusters is taken for serving as a most similar cluster to the document $i$

the residual $N$ - $M$ documents are added to the set of the clusters, each time a document $i_q$ having a maximum similarity is added to the set of the clusters, and the $Cluster(p_q)$ is updated, and until finally all the documents are added to the set of the clusters.

Preferably, in the step 6, $M$ clusters are disposed in the circular ring structure, in such a manner that clusters having more similar characteristics are distributed closer, and clusters having more dissimilar characteristics are distributed farther;

wherein in an initial condition, two clusters are randomly selected to be added to the circular ring structure, and residual $M$ - 2 clusters are added to the circular ring structure in sequence according to a following formula:

$$(p_s, p_t) = Arg \ Max\left\{\frac{\sum_{i\in Cluster(p_r),j\in Cluster(p_s)} Proximity(i,j)}{|Cluster(p_r)||Cluster(p_s)|}\right.$$
$$\left. + \frac{\sum_{i\in Cluster(p_r),k\in Cluster(p_t)} Proximity(i,k)}{|Cluster(p_r)||Cluster(p_t)|}\right\} ;$$

when each cluster $p_r$ is added to the circular ring structure, a suitable position is sought according to the formula mentioned above and a new ring for disposing the cluster $p_r$ is added between two most similar clusters $p_s$ and $p_t$;

wherein in the circular ring structure, the closer a cluster is to the cluster $p_r$, the more similar the cluster is to the cluster $p_r$ and otherwise the farther a cluster is to the cluster $p_r$, the more dissimilar the cluster is to the cluster $p_r$.

The clustering method of the present invention is capable of fusing multilingual documents, and linking multilingual words by the similar words bank. Based on the similar words bank and other information, the eigenvalues are extracted and the accumulation points are selected for classifying. According to the similarity, the documents are added to the clusters, and according to the similarity the clusters are added to the circular ring structure for arrangement. The present invention is capable of helping users to quickly look up a series of documents in a relevant classification by key words. Compared with a situation where the clustering mechanism is not provided, the present invention is capable of responding in a faster speed, avoiding troubles of manually looking up of the users and reducing waiting time of the users. The method of the present invention is capable of providing clear classification for the documents, providing more accurate and complete information, in such a manner that the users are capable of fully understanding progress of subjects that the documents belongs to in the classification.

**Brief Description of the Drawings**

Further description of the present invention is illustrated combining with accompanying drawings.

Fig. 1 is a schematic view of a clustering mechanism with fusion of multilingual documents according to a preferred embodiment of the present invention.

Fig. 2 is a schematic view of accumulation points selected according to the preferred embodiment of the present invention.

Fig. 3 is an implementing view according to the preferred embodiment of the present invention showing that clusters are disposed in a circular ring structure.

Fig. 4 is a schematic view according to the preferred embodiment of the present invention showing that clusters are disposed in a circular ring structure.

Fig. 5 is a schematic view showing that the clusters are disposed in a new circular ring structure according to the preferred embodiment of the present invention.

### Detailed Description of the Preferred Embodiment

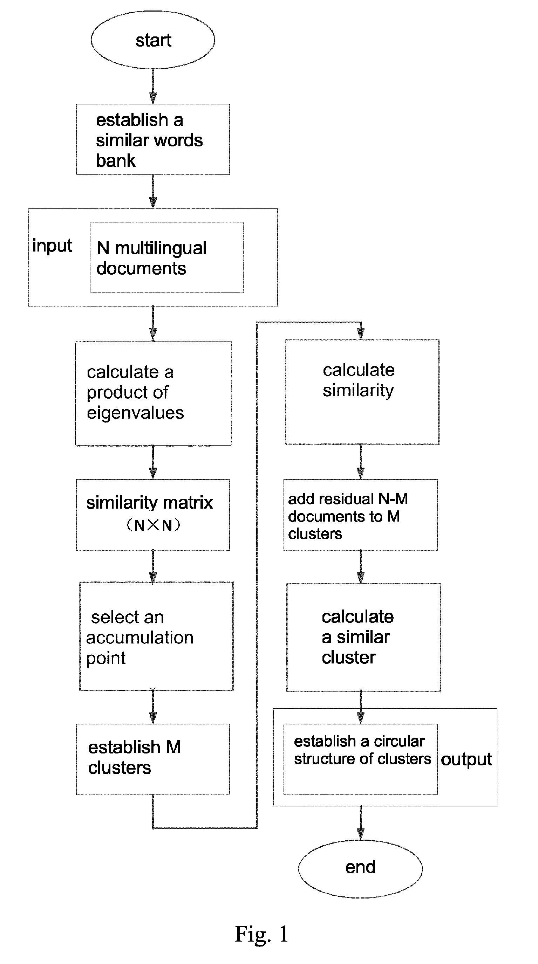

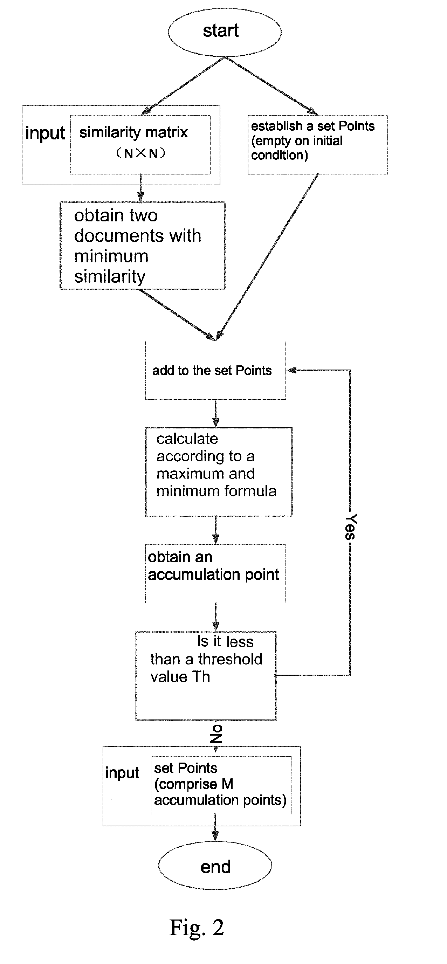

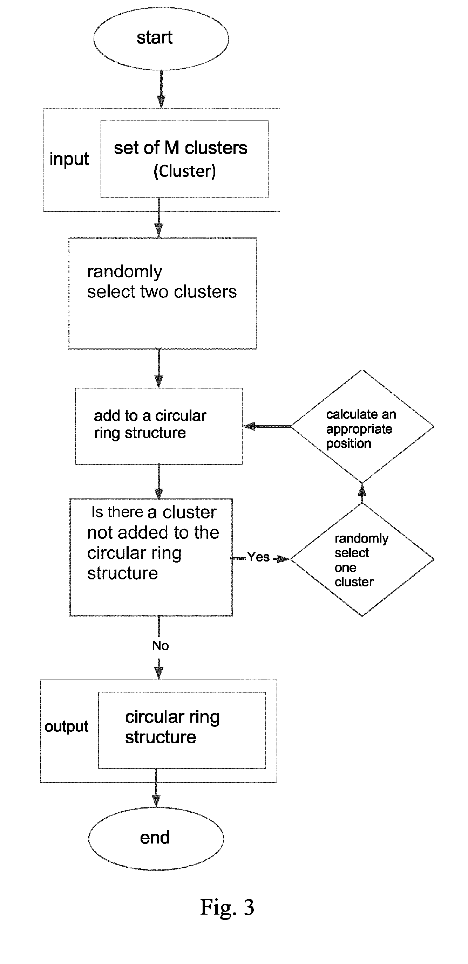

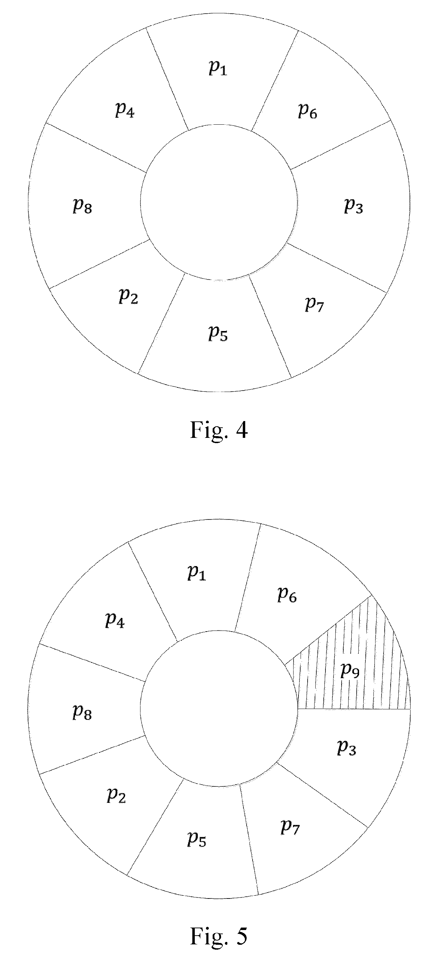

Referring to Figs. 1-5, a process of the method of the present invention is as follows.

Firstly, a similar words bank is established, wherein multilingual words having identical or similar meanings are recorded in each line of the similar words bank, and whether the words are verbs or nouns is marked. N documents participating in clustering are inputted.

Based on the similar words bank, contents and citations of the documents, extract eight eigenvalues of citation relationship ($f_1$), identical references ($f_2$), identical strings ($f_3$), similar strings ($f_4$), identical nouns ($f_5$), similar nouns ($f_6$), identical verbs ($f_7$) and similar verbs ($f_8$) to form an eigenvector $F(i)$, $F(i) = (f_1(i), f_2(i), f_3(i), f_4(i), f_5(i), f_6(i), f_7(i), f_8(i))$

Calculate a product of references $f_1(i)f_1(j) = bool \times W$; calculate a product of the identical references

$$f_2(i)f_2(j) = \frac{W}{d} \times \frac{CommonRefs(i,j)}{Max\{Refs(i),Refs(j)\}},$$

calculate a product of the identical strings

$$f_3(i)f_3(j) = \frac{W}{d^2} \times \frac{Length(CommonStrs(i,j))}{Max\{Length(i),Length(j)\}},$$

calculate a product of the identical nouns

$$f_5(i)f_5(j) = \frac{W}{d^4} \times \frac{CommonNouns(i,j)}{Max\{Nouns(i),Nouns(j)\}},$$

calculate a product of the similar nouns

$$f_6(i)f_6(j) = \frac{W}{d^5} \times \frac{SimilarNouns(i,j)}{Max\{Nouns(i),Nouns(j)\}},$$

calculate a product of the identical verbs

$$f_7(i)f_7(j) = \frac{W}{d^6} \times \frac{CommonVerbs(i,j)}{Max\{Verbs(i),Verbs(j)\}},$$

and
calculate a product of the similar verbs

$$f_8(i)f_8(j) = \frac{W}{d^7} \times \frac{SimilarVerbs(i,j)}{Max\{Verbs(i),Verbs(j)\}}.$$

Based on calculation of product of the eigenvalues, similarity of any two documents i and j is calculated,

$$Proximity(i,j) = \sum_{q=1}^{8} f_q(i)f_q(j)$$ Thus, the N documents in total form an N $\times$ N similarity matrix.

Based on the N $\times$ N similarity matrix, accumulation points are selected from a set of the documents. On an initial condition, two most dissimilar documents, i.e., with a minimum $Proximity(i,j)$, are selected for serving as two initial accumulation points $p_1$ and $p_2$. Add $p_1$ and $p_2$ to an accumulation point set denoted as $Points$. Residual accumulation points are selected according to a following maximum and minimum formula:

$$p_{m+1} = Arg \min_{p \in Points} \{Max_{r=1,2,\ldots,m} \ Proximity(p,p_r)\}$$ . Add the residual accumulation points to the accumulation point set *Points* in sequence. When a stopping accumulation point greater than a threshold value *Th* is selected, i.e., $\min_{p \in Points} \{Max \ Proximity(p,p_r)\} > Th$ , stop selecting accumulation points, wherein the stopping accumulation point is not added to the set *Points.*

In the formula, $p_r$, $r = 1,2,\ldots,m$ represents documents selected as the accumulation points. Then an (m+1)th accumulation point is selected from documents which haven't been selected as the accumulation points and added to the set *Points.* A threshold value *Th* is set for the formula mentioned above. When a stopping accumulation point selected satisfies $\min_{p \in Points} \{Max \ Proximity(p,p_r)\} > Th$, stop selecting the accumulation points. In addition, the stopping accumulation point is not added to the set *Points.* Thus, M accumulation points, i.e., M clusters, are selected.

Add residual *N - M* documents to the M clusters denoted as *Cluster($p_r$)*, $r = 1,2,\ldots,M$. In the beginning, each set only has one documents selected as the accumulation points. For a document *i* not added to the clusters, calculate a most similar cluster according to a formula $p_q = Arg \max_{r=1,2,\ldots,M} \{\frac{\sum_{p \in Cluster(p_r)} Proximity(p,i)}{|Cluster(p_r)|}\}$. The residual *N - M* documents are added in sequence to a set of the cluster. Select a document $i_q$ with a greatest similarity to add to the set of the cluster and update the *Cluster($p_q$)* till all documents are added to the set of the cluster.

Dispose the M clusters in a structure of a circular ring. At the beginning, two of the clusters are randomly selected and disposed in the circular ring. *M - 2* clusters are left. Randomly select one cluster from the *M -2* clusters, and find an appropriate position in the circular ring according to a formula

$$(p_s, p_t) = Arg \ Max\{\frac{\sum_{i \in Cluster(p_r), j \in Cluster(p_s)} Proximity(i,j)}{|Cluster(p_r)||Cluster(p_s)|} + \frac{\sum_{i \in Cluster(p_r), k \in Cluster(p_t)} Proximity(i,k)}{|Cluster(p_r)||Cluster(p_t)|}\}$$ .

A new ring $p_r$ is added between the clusters $p_s$ and $p_t$ which are most similar.

In the whole process, a final output comprises the *M* clusters and is disposed in the structure of the circular ring. Each cluster comprises similar documents without restriction on languages. The closer a distance is between clusters in the structure of the circular ring, the more similar are the clusters; and otherwise the farther the distance is therebetween, the more dissimilar are the clusters.

**Claims**

1. A clustering method for multilingual documents, comprising following steps of:

    step 1: establishing a similar words bank comprising multilingual words;
    step 2: extracting eight eigenvalues;
    step3: calculating a similarity of any two documents *i* and *j* according to the eight eigenvalues;
    step 4: selecting accumulation points from a set of the documents to establish a cluster;
    step 5: adding residual documents which are not selected into the set to the cluster; and
    step 6: disposing the cluster in a circular ring structure.

2. The clustering method, as recited in claim 1, wherein in the step 1, multilingual words having identical or similar meanings are recorded in each line of the similar words bank, and whether the multilingual words are verbs or nouns is marked.

3. The clustering method, as recited in claim 1, wherein in the step 2, the eight eigenvalues comprise: an eigenvalue of citation relationships ($f_1$), an eigenvalue of identical references ($f_2$), an eigenvalue of identical strings ($f_3$), an eigenvalue of similar strings ($f_4$), an eigenvalue of identical nouns ($f_5$), an eigenvalue of similar nouns ($f_6$), an eigenvalue of identical verbs ($f_7$), and an eigenvalue of similar verbs ($f_8$);

wherein the eight eigenvalues are not limited to a particular language, and the multilingual documents are fused in a cluster classification;

wherein citation documents refer to references listed in a document;

the identical strings refer to strings formed by a section of identical words;

the similar strings refer to strings having a section of identical words or formed by a section of similar words recorded in the similar words bank;

the identical nouns refer to completely identical nouns;

the similar nouns refer to nouns recorded on a same line of the similar words bank;

the identical verbs refer to completely identical verbs; and

the similar verbs refer to verbs recorded on a same line of the similar words bank;

wherein for a document $i$, an eigenvector thereof is $F(i)$, $F(i) = (f_1(i), f_2(i), f_3(i), f_4(i), f_5(i), f_6(i), f_7(i), f_8(i))$

4. The clustering method, as recited in claim 2, wherein in the step 2, the eight eigenvalues comprise: an eigenvalue of citation relationships ($f_1$), an eigenvalue of identical references ($f_2$), an eigenvalue of identical strings ($f_3$), an eigenvalue of similar strings ($f_4$), an eigenvalue of identical nouns ($f_5$), an eigenvalue of similar nouns ($f_6$), an eigenvalue of identical verbs ($f_7$) and an eigenvalue of similar verbs ($f_8$);

wherein the eight eigenvalues are not limited to a particular language, and the multilingual documents are fused in a cluster classification;

wherein citation documents refer to references listed in a document;

the identical strings refer to strings formed by a section of identical words;

the similar strings refer to strings having a section of identical words or formed by a section of similar words recorded in the similar words bank;

the identical nouns refer to completely identical nouns;

the similar nouns refer to nouns recorded on a same line of the similar words bank; the identical verbs refer to completely identical verbs; and

the similar verbs refer to verbs recorded on a same line of the similar words bank; wherein for a document $i$, an eigenvector thereof is $F(i)$, $F(i) = (f_1(i), f_2(i), f_3(i), f_4(i), f_5(i), f_6(i), f_7(i), f_8(i))$

5. The clustering method, as recited in any of the claims 1-4, wherein, in the step 3, importance of the eight eigenvalues is $f_1 > f_2 > f_3 > f_4 > f_5 > f_6 > f_7 > f_8$. ;

wherein the step 3 specifically comprises a step of calculating products of eigenvalues of any two documents $i$ and $j$, wherein the step of calculating the products comprises:

calculating a product of citation documents $f_1(i) f_1(j)$, wherein $W$ is defined as a weight of one of the documents $i$ and $j$ cited by the other one of the documents $i$ and $j$;

$bool$ represents that whether a citation relationship exists, wherein a value of $bool$ is 0 or 1, the value 0 represents that the citation relationship does not exist, and the value 1 represents that the citation relationship exists;

wherein a calculating expression is:

$$f_1(i)f_1(j) = bool \times W$$

;

calculating a product of the identical references $f_2(i)f2(j)$, wherein $d$ is defined as a weighting factor of division and $d \geq 1$

$Refs$ represents a number of the references;

$Max\{Refs(i), Refs(j)\}$ represents a maximum of the number of the references selected from $i$ and $j$;

$CommonRefs(i,j)$ represents a number of identical references in the two documents of $i$ and $j$, and a calculating expression is:

$$f_2(i)f_2(j) = \frac{W}{d} \times \frac{CommonRefs(i,j)}{Max\{Refs(i),Refs(j)\}}$$ ;

calculating a product of the identical strings $f_{3i}(i)f_{3i}(j)$, wherein *CommonStrsi(i,j)* is defined as identical strings in the two documents *i* and *j* ; *Length* represents a length of the strings, and thus *Length*(*CommonStrs*(*i,j*)) represents a total length of the identical strings, Max{*Lengthi*(*i*),*Length*(*j*)} represents a maximum of a total length of the two documents *i* and *j* ; and a calculating expression is:

$$f_3(i)f_3(j) = \frac{W}{d^2} \times \frac{Length(CommonStrs(i,j))}{Max\{Length(i),Length(j)\}}$$ ;

calculating a product of the similar strings $f_4(i)f_4(j)$, wherein *SimilarStrs(i,j)* is defined as similar strings in the two documents *i* and *j*, and a calculating expression is:

$$f_4(i)f_4(j) = \frac{W}{d^3} \times \frac{Length(SimilarStrs(i,j))}{Max\{Length(i),Length(j)\}}$$ ;

calculating a product of the identical nouns $f_5(i)f5i(j)$, *CommonNouns(i,j)* is defined as identical nouns in the two documents *i* and *j* ; *Nouns* represents a total number of nouns in the documents, and thus Max{*Nouns*(*ii*), *Nouns*(*j*)} represents a maximum of the total number of the nouns in the two documents *i* and *j*, and a calculating expression is:

$$f_5(i)f_5(j) = \frac{W}{d^4} \times \frac{CommonNouns(i,j)}{Max\{Nouns(i),Nouns(j)\}}$$ ;

calculating a product of the similar nouns $f_6(i)f_6(j)$, wherein *SimilarNouns(i,j)* is defined as nouns having similar meanings in the two documents *i* and *j*, and a calculating expression is:

$$f_6(i)f_6(j) = \frac{W}{d^5} \times \frac{SimilarNouns(i,j)}{Max\{Nouns(i),Nouns(j)\}}$$ ;

calculating a product of the identical verbs, wherein *CommonVerbs(i,j)* is defined as identical verbs in the two documents *i* and *j*, *Verbs* represents a total number of verbs in the documents, and thus Max{*Verbsi*(*i*), *Verbs*(*j*)} represents a maximum of the total number of the nouns in the two documents *i* and *j*, and a calculating expression is:

$$f_7(i)f_7(j) = \frac{W}{d^6} \times \frac{CommonVerbs(i,j)}{Max\{Verbs(i),Verbs(j)\}};$$

and

calculating a product of the similar verbs $f_8(i)f_8(j)$, *SimilarVerbs(i,j)* is defined as verbs having similar meanings in the two documents *i* and *j*, and a calculating expression is:

$$f_8(i)f_8(j) = \frac{W}{d^7} \times \frac{SimilarVerbs(i,j)}{Max\{Verbs(i),Verbs(j)\}};$$

based on calculations of products of the eigenvalues, a similarity of the two documents *i* and *j* is defined as:

$$Proximity(i,j) = \sum_{q=1}^{8} f_q(i)f_q(j).$$

6. The clustering method, as recited in any of the claims 1-4, wherein in the step 4, on an initial condition, two most dissimilar documents, i.e., with a minimum *Proximity(i,j)*, are selected for serving as two initial accumulation points $p_1$ and $p_2$, $p_1$ and $p_2$ are added to an accumulation point set denoted as *Points;* residual accumulation points are selected according to a following maximum and minimum formula:

$$p_{m+1} = Arg \min_{p \in Points} \{Max_{r=1,2,...,m} Proximity(p,p_r)\};$$

wherein in the formula, $p_r$, $r = 1,2, ..., m$ represents documents selected as the accumulation points, then an (m+1)th accumulation point is selected from documents which haven't been selected as the accumulation points and added to the set *Points,* a threshold value *Th* is set for the formula mentioned above; when a stopping accumulation point

selected satisfies $\min\limits_{p \in Points} \{Max\ Proximity(p,p_r)\} > Th$, selection of accumulation points are stopped; in addition, the stopping accumulation point is not added to the set *Points.*

7. The clustering method, as recited in claim 5, wherein in the step 4, on an initial condition, two most dissimilar documents, i.e., with a minimum *Proximityi(i,j)*, are selected for serving as two initial accumulation points $p_1$ and $p_2$, $p_1$ and $p_2$ are added to an accumulation point set denoted as *Points*; residual accumulation points are selected according to a following maximum and minimum formula:

$$p_{m+1} = Arg \min_{p \in Points} \{Max_{r=1,2,...,m} Proximity(p,p_r)\};$$

wherein in the formula, $p_r$, $r$ = 1,2, ...,$m$ represents documents selected as the accumulation points, then an (m+1)th accumulation point is selected from documents which haven't been selected as the accumulation points and added to the set *Points,* a threshold value *Th* is set for the formula mentioned above; when a stopping accumulation point

selected satisfies $\underset{p \in Points}{Min} \{Max\ Proximity(p, p_r)\} > Th$, selection of the accumulation points are stopped; in addition, the stopping accumulation point is not added to the set *Points.*

8. The clustering method, as recited in any of the claims 1-4, wherein in the step 5, $N$ represents a total number of documents participating in clustering, $M$ represents a total number of accumulation points selected;
at the beginning, $M$ documents serve as accumulation points of the clustering, residual $N$ - $M$ documents are added in the M clusters;
$Cluster(p_r)$, $r$ = 1,2,..., $M$ represents a set of each cluster;
at the beginning, each set only has one document serving as the accumulation points;
for a document $i$ not participating in the clusters, a most similar cluster is calculated according to a following expression:

$$p_q = Arg\ \underset{r=1,2,...,M}{Max} \left\{ \frac{\sum_{p \in Cluster(p_r)} Proximity(p, i)}{|Cluster(p_r)|} \right\};$$

in the expression mentioned above, a similarity of between a document $i$ not added in the clusters and all documents in the set $Cluster(p_r)$ of each cluster, an average is taken for serving as a similarity of the document $i$ and the clusters; a maximum of all the clusters is taken for serving as a most similar cluster to the document $i$
the residual $N$ - $M$ documents are added to the set of the clusters, each time a document $i_q$ having a maximum similarity is added to the set of the clusters, and the $Cluster(p_q)$ is updated, until finally all the documents are added to the set of the clusters.

9. The clustering method, as recited in claim 7, wherein in the step 5, $N$ represents
a total number of documents participating in clustering, $M$ represents a total number of accumulation points selected;
at the beginning, $M$ documents serve as accumulation points of the clustering, residual $N$ - $M$ documents are added in the M clusters;
$Cluster(p_r)$, $r$ = 1,2,..., $M$ represents a set of each cluster;
at the beginning, each set only has one document serving as the accumulation points;
for a document $i$ not participating in the clusters, a most similar cluster is calculated according to a following expression:

$$p_q = Arg\ \underset{r=1,2,...,M}{Max} \left\{ \frac{\sum_{p \in Cluster(p_r)} Proximity(p, i)}{|Cluster(p_r)|} \right\};$$

in the expression mentioned above, a similarity of between a document $i$ not added in the clusters and all documents in the set $Cluster(p_r)$ of each cluster, an average is taken for serving as a similarity of the document $i$ and the clusters; a maximum of all the clusters is taken for serving as a most similar cluster to the document $i$
the residual $N$ - $M$ documents are added to the set of the clusters, each time a document $i_q$ having a maximum similarity is added to the set of the clusters, and the $Cluster(p_q)$ is updated, until finally all the documents are added to the set of the clusters.

10. The clustering method, as recited in any of the claims 1-4, wherein in the step 6, $M$ clusters are disposed in the circular ring structure, in such a manner that clusters having more similar characteristics are distributed closer, and clusters having more dissimilar characteristics are distributed farther;
wherein in an initial condition, two clusters are randomly selected to be added to the circular ring structure, and residual $M$ - 2 clusters are added to the circular ring structure in sequence according to a following formula:

$$(p_s, p_t) = Arg\ Max\{\frac{\sum_{i \in Cluster(p_r), j \in Cluster(p_s)} Proximity(i,j)}{|Cluster(p_r)||Cluster(p_s)|}$$
$$+ \frac{\sum_{i \in Cluster(p_r), k \in Cluster(p_t)} Proximity(i,k)}{|Cluster(p_r)||Cluster(p_t)|}\} \quad ;$$

when each cluster $p_r$ is added to the circular ring structure, a suitable position is sought according to the formula mentioned above and a new ring for disposing the cluster $p_r$ is added between two most similar clusters $p_s$ and $p_t$ ;
wherein in the circular ring structure, the closer a cluster is to the cluster $p_r$, the more similar the cluster is to the cluster $p_r$ and otherwise the farther a cluster is to the cluster $p_r$, the more dissimilar the cluster is to the cluster $p_r$.

11. The clustering method, as recited in claim 9, wherein in the step 6, $M$ clusters are disposed in the circular ring structure, in such a manner that clusters having more similar characteristics are distributed closer, and clusters having more dissimilar characteristics are distributed farther;
wherein in an initial condition, two clusters are randomly selected to be added to the circular ring structure, and residual $M$ - 2 clusters are added to the circular ring structure in sequence according to a following formula:

$$(p_s, p_t) = Arg\ Max\{\frac{\sum_{i \in Cluster(p_r), j \in Cluster(p_s)} Proximity(i,j)}{|Cluster(p_r)||Cluster(p_s)|}$$
$$+ \frac{\sum_{i \in Cluster(p_r), k \in Cluster(p_t)} Proximity(i,k)}{|Cluster(p_r)||Cluster(p_t)|}\} \quad ;$$

when each cluster $p_r$ is added to the circular ring structure, a suitable position is sought according to the formula mentioned above and a new ring for disposing the cluster $p_r$ is added between two most similar clusters $p_s$ and $p_t$ ;
wherein in the circular ring structure, the closer a cluster is to the cluster $p_r$, the more similar the cluster is to the cluster $p_r$ and otherwise the farther a cluster is to the cluster $p_r$, the more dissimilar the cluster is to the cluster $p_r$.

start

establish a
similar words
bank

input | N multilingual
documents

calculate a
product of
eigenvalues

calculate
similarity

similarity matrix
（N×N）

add residual N-M
documents to M
clusters

select an
accumulation
point

calculate
a similar
cluster

establish M
clusters

establish a circular
structure of clusters | output

end

Fig. 1

start

| input | similarity matrix
(N×N) |

establish a set Points
(empty on initial
condition)

obtain two
documents with
minimum
similarity

add to the set Points

calculate
according to a
maximum and
minimum formula

obtain an
accumulation point

Is it less
than a threshold
value Th

Yes

No

| input | set Points
(comprise M
accumulation points) |

end

Fig. 2

Fig. 3

Fig. 4

Fig. 5

| | | | |
|---|---|---|---|
| | **INTERNATIONAL SEARCH REPORT** | International application No. | |
| | | PCT/CN2013/083524 | |

**A. CLASSIFICATION OF SUBJECT MATTER**

G06F 17/30 (2006.01) i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, WPI, EPODOC, IEEE, CNKI, GOOGLE: multilingual, multi 2w lingual, cross 3w language, cluster, near, index, search, synonym, same, accumulation point, circle, glossary, vocabulary

**C. DOCUMENTS CONSIDERED TO BE RELEVANT**

| Category* | Citation of document, with indication, where appropriate, of the relevant passages | Relevant to claim No. |
|---|---|---|
| Y | CN 102999538 A (FUJITSU LTD.) 27 March 2013 (27.03.2013) description, paragraphs [0027]-[0140] | 1, 2 |
| Y | BI, Jianting et al. Expansion Method for Language-crossed Query Based on Latent Semantic Analysis, Computer Engineering, no.10, vol. 35, 31 May 2009 (31.05.2009), ISSN: ISSN 1000-3428，pages 49 and 50 | 1, 2 |
| A | CN 102682000 A (BEIJING BAIDU NETCOM SCI&TECHNOLOGY CO.) 19 September 2012 (19.09.2012) the whole document | 1-11 |
| A | US 2010082511 A1 (MICROSOFT CORP) 01 April 2010 (01.04.2010) the whole document | 1-11 |

☐ Further documents are listed in the continuation of Box C.　　☒ See patent family annex.

| | | |
|---|---|---|
| *　　Special categories of cited documents: | "T" | later document published after the international filing date or priority date and not in conflict with the application but cited to understand the principle or theory underlying the invention |
| "A"　document defining the general state of the art which is not considered to be of particular relevance | | |
| "E"　earlier application or patent but published on or after the international filing date | "X" | document of particular relevance; the claimed invention cannot be considered novel or cannot be considered to involve an inventive step when the document is taken alone |
| "L"　document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"　document referring to an oral disclosure, use, exhibition or other means | | |
| "P"　document published prior to the international filing date but later than the priority date claimed | "&"document member of the same patent family | |

| Date of the actual completion of the international search | Date of mailing of the international search report |
|---|---|
| 26 May 2014 | 12 August 2014 |

| Name and mailing address of the ISA | Authorized officer |
|---|---|
| State Intellectual Property Office of the P. R. China No. 6, Xitucheng Road, Jimenqiao Haidian District, Beijing 100088, China Facsimile No. (86-10) 62019451 | WANG, Fang Telephone No. (86-10) 82245496 |

Form PCT/ISA /210 (second sheet) (July 2009)

## INTERNATIONAL SEARCH REPORT
Information on patent family members

| | International application No. |
|---|---|
| | PCT/CN2013/083524 |

| Patent Documents referred in the Report | Publication Date | Patent Family | Publication Date |
|---|---|---|---|
| CN 102682000 A | 19 September 2012 | None | |
| US 2010082511 A1 | 01 April 2010 | None | |
| CN 102999538 A | 27 March 2013 | None | |

Form PCT/ISA/210 (patent family annex) (July 2009)